# EUROPÄISCHE PATENTSCHRIFT

(11) **EP 3 258 207 B1**
(45) Veröffentlichungstag und Bekanntmachung des Hinweises auf die Patenterteilung: **04.08.2021**
(21) Anmeldenummer: 17174332.1
(22) Anmeldetag: 02.06.2017
(51) Int. Cl.: G01B 5/14, G01B 5/02, G01B 11/14, G01B 11/02, G01B 3/04, G01N 21/956

(54) **MESSANORDNUNG ZUM VERMESSEN VON STRUKTUREN EINES MESSOBJEKTS**
MEASURING ASSEMBLY FOR MEASURING STRUCTURES OF AN OBJECT TO BE MEASURED
SYSTÈME DE MESURE DE STRUCTURES D'UN OBJET À MESURER

(30) Priorität: 15.06.2016 DE 102016110956
(43) Veröffentlichungstag der Anmeldung: 20.12.2017
(73) Patentinhaber: Vizjak, Thomas, 81543 München (DE)
(72) Erfinder: Vizjak, Thomas, 81543 München (DE)
(74) Vertreter: Epping - Hermann - Fischer

(56) Entgegenhaltungen:
- WO-A1-01/73374
- US-A- 4 596 037
- US-A- 4 667 231
- US-A- 4 916 535
- Martin Erlekamm: "Instructions, -ibidi heating system", , 7. Mai 2008 (2008-05-07), XP055395987, Gefunden im Internet: URL:http://ibidi.com/img/cms/products/inst ruments/I_109XX_HeatingSystem/IN_1091X_hea ting_system_Minitube.pdf [gefunden am 2017-08-03]
- Tae Bong Eom ET AL: "Tape measuring system using linear encoder and digital camera", Proceedings of SPIE, vol. 8788, 13 May 2013 (2013-05-13), page 87883P, XP055757603, 1000 20th St. Bellingham WA 98225-6705 USA ISSN: 0277-786X, DOI: 10.1117/12.2020470 ISBN: 978-1-5106-3927-0
- -: "Kelch GmbH - Kenova set Line V224 Bedienungsanleitung", , 1 January 2013 (2013-01-01), XP055606862, Retrieved from the Internet: URL:http://kelch.vertouk.com/contentfiles/ Kelch-6.pdf [retrieved on 2019-07-18]

## Beschreibung

Die Erfindung betrifft eine Messanordnung zum Vermessen der Geometrie von Strukturen eines Messobjekts, beispielsweise von Abständen zwischen Strukturen des Messobjekts.

Zur Sicherstellung der Fertigung hochwertiger Produkte müssen geometrische Größen der Produkte, beispielsweise Abstände zwischen Strukturen auf einer Oberfläche der Produkte, während der gesamten Herstellung der Produkte, zum Beispiel bei der Entwicklung, der Produktion und der Endkontrolle, präzise vermessen werden. Bei der Herstellung von Etiketten ist es beispielsweise erforderlich, die Abstände zwischen Strukturen auf der Oberfläche der Etiketten zu vermessen.

Eine zu diesem Zweck verwendbare Messanordnung muss eine hohe Genauigkeit, Fähigkeit für den Prozess und Robustheit aufweisen. Die Messanordnung soll in der Lage sein eine Vielzahl von Strukturen eines Messobjekts, beispielsweise Abstände zwischen Kanten, grafische Elemente, Prägungen, Schlitzungen, Gravuren etc. zu vermessen. Die Messung soll dabei unabhängig von einem Untergrund, auf dem die Strukturen angeordnet sind, mit hoher Genauigkeit erfolgen. Die Messanordnung soll in der Lage sein, Strukturen auf unterschiedlichen Trägermaterialien, wie beispielsweise Papier, Folien, Textilien, Stanzbleche etc., vermessen zu können.

In der US 4,596,037 A ist ein Videomesssystem angegeben, bei dem Videokameras über einer Arbeitsplatte an einem Schlitten, der entlang einer Stange beweglich ist, befestigt sind. In der WO 01/73374 A1 ist ein Messmikroskop mit einer elektronischen Kamera, die mittels Antrieben relativ zu einem Objekt in X-, Y- und Z-Richtung verschiebbar ist, gezeigt. In der US 4,667,231 A ist eine Messanordnung gezeigt, bei der die Kante eines Messobjekts von einer Lampe durchleuchtet wird. Der Lichtstrahl fällt auf einen beweglichen Spiegel und von dort auf ein Diodenfeld eines Sensors. In der US 4,916,535 A ist ein Messsystem zur zerstörungsfreien Prüfung von Materialien angegeben, wobei an einer Führungsschiene ein Messschlitten beweglich angeordnet ist, der einen Datensender aufweist. In Tae Bong Eom et al.: "Tape Measuring System using Linear Encoder and Digital Camera", Optical Measurement Systems for Industrial Inspection VIII, Proc. of the SPIE Bd. 8788, Seite 87883P (6 pp.), ISSN: 0277-786X, DOI: 10.1117/12.2020470 ist ein Kalibrierungssystem beschrieben, bei dem eine digitale Kamera mit einem optischen Mikroskop an einem Messschlitten befestigt ist. Der Messschlitten kann entlang einer Schiene verfahren werden. Die Schiene ist auf einer Aluminium-Arbeitsplatte montiert.

Ein Anliegen der vorliegenden Erfindung ist es, eine Messanordnung anzugeben, mit der es ermöglicht wird, Strukturen eines Messobjekts mit hoher Genauigkeit zu vermessen.

Eine Messanordnung, mit der geometrische Strukturen eines Objekts mit hoher Präzision vermessen werden können, ist im Patentanspruch 1 angegeben. Die Messanordnung umfasst ein elektronisches Lineal mit einem Messschlitten und ein digitales Mikroskop, das an dem Messschlitten des elektronischen Lineals befestigt ist.

Die Messanordnung ist derart ausgebildet, dass das digitale Mikroskop bei einer Verschiebung des Messschlittens zusammen mit dem Messschlitten verschoben wird. Zum Vermessen von Strukturen eines Messobjekts wird das digitale Mikroskop über dem Messobjekt ausgerichtet. Das digitale Mikroskop kann beispielsweise über einer Kante einer Struktur des Messobjekts ausgerichtet werden. Ein Bild der Kante kann dabei gegebenenfalls vergrößert auf einem Bildschirm des digitalen Mikroskops angezeigt werden.

In dieser Position des Messschlittens kann eine Anzeige auf einer Anzeigeeinrichtung des Messschlittens in eine Nullstellung geschaltet werden. Mit Hilfe des Messschlittens wird das digitale Mikroskop nun auf eine weitere Struktur des Messobjekts, beispielsweise eine weitere Kante einer benachbarten Struktur auf der Oberfläche des Messobjekts, verschoben. Auf der Anzeigeeinrichtung kann der Abstand zwischen den Kanten der beiden Strukturen abgelesen werden.

Ausführungsbeispiele der Erfindung werden im Folgenden anhand von Figuren näher erläutert.

Es zeigen:
- Figur 1: eine Draufsicht auf eine Messanordnung zum Vermessen von Strukturen eines Messobjekts,
- Figur 2: eine Seitenansicht auf eine Messanordnung zum Vermessen von Strukturen eines Messobjekts,
- Figuren 3A und 3B: das Vermessen eines Abstandes zwischen Kanten von Strukturen eines Messobjekts.

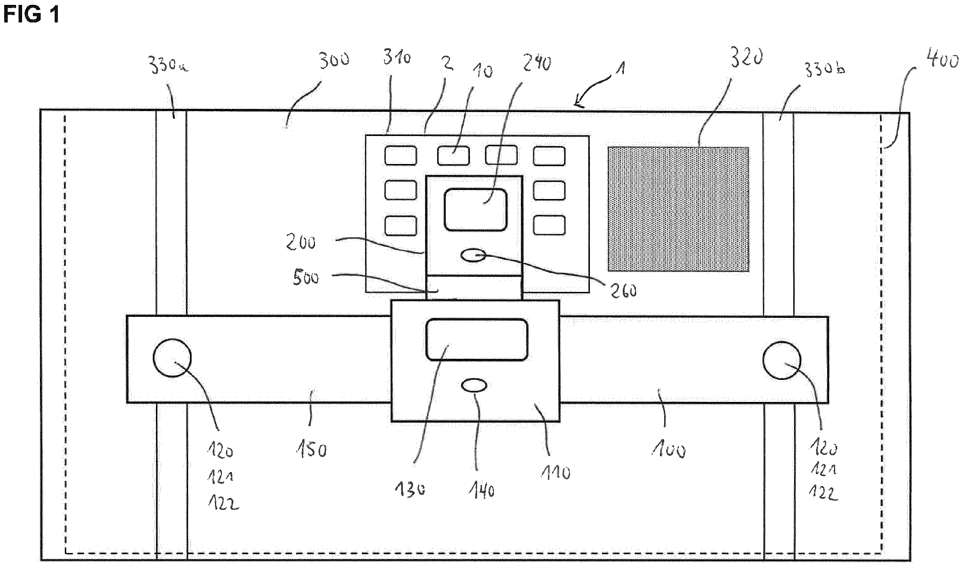

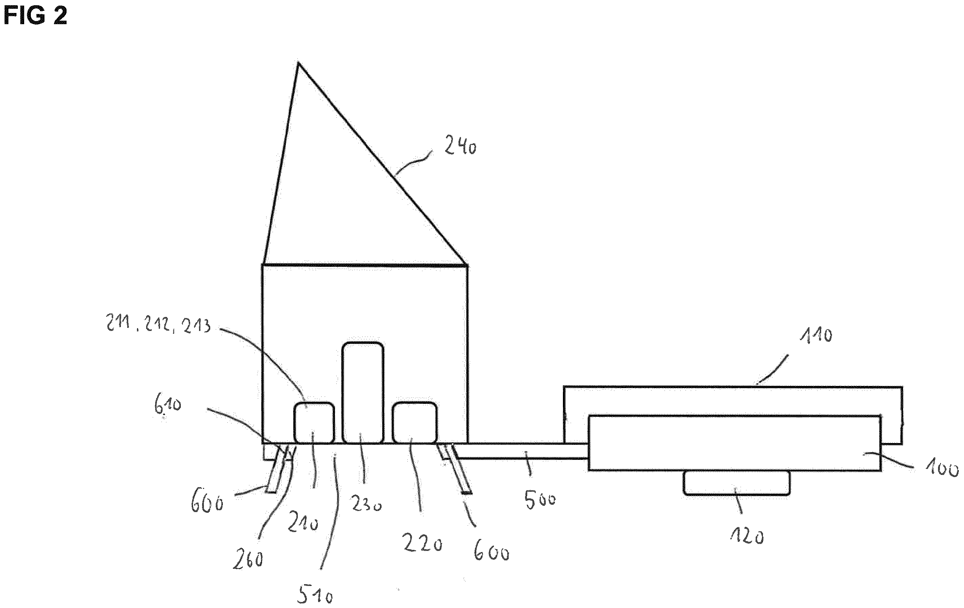

Die Figuren 1 und 2 zeigen eine Messanordnung 1 zum digitalen Vermessen von Abständen zwischen Strukturen eines Messobjekts 10. Die Messobjekte 10 sind beispielsweise Etiketten, die auf einem Etikettenbogen 2 aufgeklebt sind. Die Messanordnung 1 ist in Figur 1 in einer Draufsicht und in Figur 2 in einer Seitenansicht gezeigt.

Die Messanordnung 1 umfasst ein elektronisches/digitales Lineal 100 mit einem Messschlitten 110 und ein digitales Mikroskop 200. Das digitale Mikroskop 200 ist an dem Messschlitten 110 des elektronischen Lineals 100 derart befestigt, dass es bei einer Bewegung des Messschlittens 110 mitbewegt wird. Der Messschlitten 110 ist entlang einer Schiene 150 des elektronischen Lineals 100 in Längsrichtung der Schiene 150 verschiebbar angeordnet. Das digitale Mikroskop 200 kann beispielsweise mittels eines Halteelements 500 an dem Messschlitten 110 des elektronischen Lineals 100 befestigt sein.

Wie in den Figuren 1 und 2 gezeigt ist, ist das Halteelement 500 an einer Seite an dem Messschlitten 110 des elektronischen Lineals 100 befestigt. An der anderen Seite des Halteelements 500 ist das digitale Mikroskop 200 befestigt. Das Halteelement 500 kann beispielsweise als ein dünnes Blech ausgebildet sein. Das Halteelement 500 kann an dem Ende, an dem das digitale Mikroskop 200 befestigt ist, eine Aussparung 510 aufweisen. Zum Befestigen des digitalen Mikroskops 200 an dem Halteelement 500 kann ein Fixierungselement 600, beispielsweise in Form einer Mutter aus einem transparenten Material, verwendet werden. Das Fixierungselement 600 weist beispielsweise ein Innengewinde 610 auf, an dem ein Außengewinde 260 des digitalen Mikroskops befestigt werden kann, um somit das digitale Mikroskop 200 sicher an dem Halteelement 500 zu fixieren.

Gemäß einer möglichen Ausführungsform der Messanordnung 1 weist das elektronische Lineal 100 eine Befestigungseinrichtung 120 zum Befestigen der Messanordnung 1 auf einem Untergrund auf. Die Befestigungseinrichtung 120 kann beispielsweise mindestens einen Magnet 121 aufweisen. Dadurch ist es möglich, die Messanordnung 1 aus dem elektronischen Lineal 100 und dem digitalen Mikroskop 200 an einen metallischen Untergrund, beispielsweise an einem metallischen Gehäuse einer Maschine, mit Hilfe des mindestens einen Magnetes 121 zu fixieren.

Neben beziehungsweise anstelle eines Magneten können beliebige andere geeignete Befestigungseinrichtungen zum Fixieren der Messanordnung 1 auf einem Untergrund verwendet werden. Die Befestigungseinrichtung 120 kann beispielsweise mindestens einen Saugfuß 122 aufweisen. Mittels des mindestens einen Saugfußes 122 ist es möglich, die Messanordnung 1, insbesondere das elektronische Lineal 100, durch Erzeugung eines Vakuums sicher an einem Untergrund zu befestigen.

Bei der in den Figuren 1 und 2 gezeigten Ausführungsform der Messanordnung 1 ist an der Unterseite des elektronischen Lineals 100 an entgegengesetzten Endabschnitten jeweils eine Befestigungseinrichtung 120, beispielsweise ein Magnet 121 oder ein Saugfuß 122, vorgesehen.

Um lediglich ein Verrutschen der Messanordnung 1 aus dem elektronischen Lineal 100 und dem digitalen Mikroskop 200 auf einem Untergrund zu verhindern, kann die Befestigungseinrichtung 120 in einer einfachen Ausführungsform beispielsweise als ein Gewicht zum Beschweren der Messanordnung 1 ausgebildet sein.

Das elektronische Lineal 100 kann eine Anzeigeeinrichtung 130 zum digitalen Anzeigen eines Messwertes und eine Bedieneinrichtung 140 zum Zurücksetzen des Messwertes auf eine Nullstellung aufweisen. Das elektronische Lineal 100 ist insbesondere derart ausgebildet, dass sich der auf der Anzeigeeinrichtung 130 angezeigte Messwert ausgehend von der Nullstellung in Abhängigkeit von einer Bewegung des Messschlittens 110 verändert. Der angezeigte Messwert gibt beispielsweise einen Abstand zwischen Strukturen eines Messobjekts an.

Wenn beispielsweise ein Abstand zwischen einer jeweiligen Kante zweier Strukturen auf der Oberfläche eines Messobjekts gemessen werden soll, wird der Messschlitten 110 zunächst derart verfahren, dass das digitale Mikroskop 200 auf eine Kante einer ersten Struktur ausgerichtet ist. In dieser Stellung wird der auf der Anzeigeeinrichtung 130 angezeigte Messwert mittels der Bedieneinrichtung 140 auf die Nullstellung zurückgesetzt. Anschließend wird der Messschlitten 110 derart verfahren, dass das digitale Mikroskop 200 auf die Kante einer zweiten Struktur des Messobjekts ausgerichtet ist. Auf der Anzeigeeinrichtung 130 des Messschlittens 110 wird der Verfahrweg des Messschlittens, der einem Abstand zwischen der Kante der ersten und der Kante der zweiten Struktur des Messobjekts entspricht, angezeigt.

Das digitale Mikroskop 200 umfasst eine Kamera 230 zur Aufnahme eines Bildes des Messobjekts und einen Bildschirm 240 zur Anzeige des aufgenommenen Bildes des Messobjekts. Die Kamera ist mittels eines Bedienelements 260 einschaltbar. Gemäß einer möglichen Ausführungsform kann die Kamera 230 mit einer Vergrößerungsfunktion/Zoomfunktion zum Vergrößern/Zoomen eines Bereichs des Messobjekts 10 in einem Bild, das auf dem Bildschirm 240 angezeigt wird, ausgestattet sein. Dadurch ist es möglich, Strukturen, beispielsweise Kanten eines Musters, das auf einer Oberfläche des Messobjekts aufgedruckt ist, zu vergrößern. Der vergrößerte Bereich des Messobjekts 10 wird auf dem Bildschirm 240 des digitalen Mikroskops 200 angezeigt. Dadurch kann das digitale Mikroskop 200 präzise auf ein Strukturelement, beispielsweise eine Kante einer Struktur, des Messobjekts ausgerichtet werden. Die Vergrößerung des Bildes kann zum Beispiel an dem Bedienelement 260 eingestellt werden.

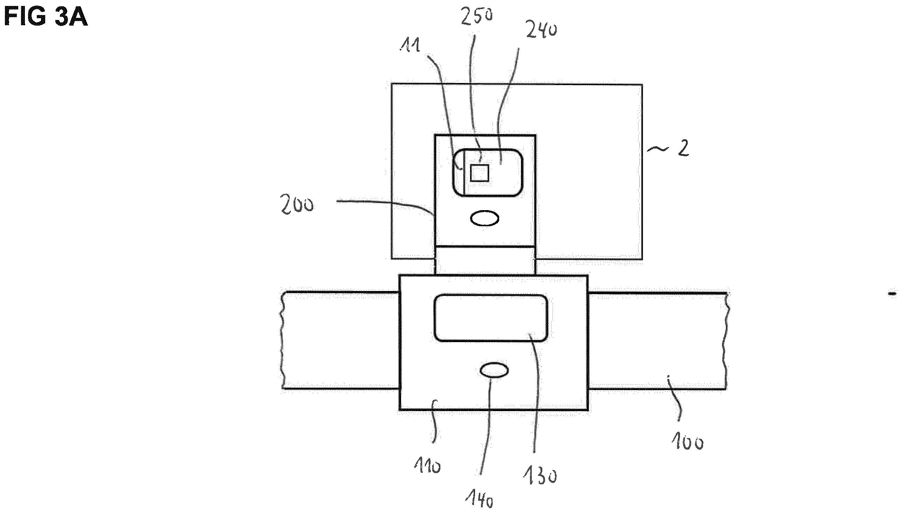

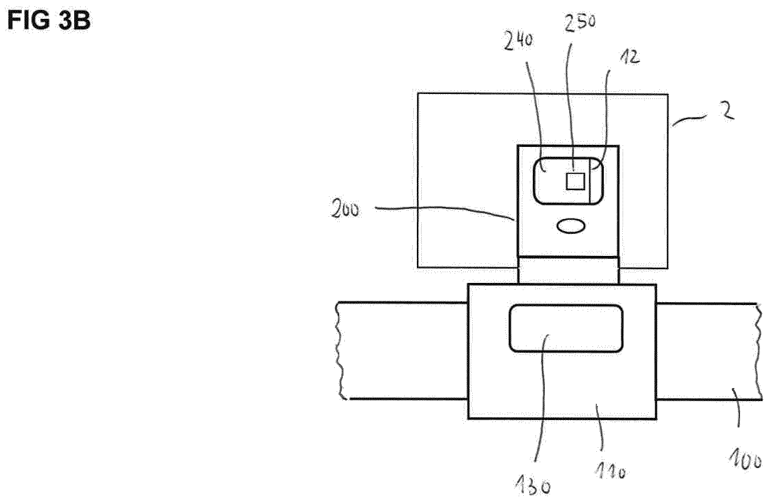

Gemäß einer möglichen Ausführungsform der Messanordnung 1 kann das digitale Mikroskop 200 derart ausgebildet sein, dass in dem Bild auf dem Bildschirm 240 des Mikrokops 200 ein Marker 250 zum Ausrichten des digitalen Mikroskops auf eine Struktur des Messobjekts eingeblendet ist. Der Marker 250 kann beispielsweise ein Rahmen oder ein Kreuz sein, das in dem Bild des Messobjekts auf dem Bildschirm 240 angezeigt wird. Durch ein entsprechendes Verschieben des Messschlittens 110 kann das digitale Mikroskop auf eine Struktur des Messobjekts ausgerichtet werden. Dies geschieht beispielsweise dadurch, in dem der Marker 250 auf eine Kante einer Struktur ausgerichtet wird. Der Marker 250 in Form eines Rahmens ist in den Figuren 3A und 3B gezeigt.

Gemäß einer möglichen Ausführungsform der Messanordnung 1 kann das digitale Mikroskop 200 eine Beleuchtungseinrichtung 210 zum Beleuchten des Messobjekts 10 aufweisen. Die Beleuchtungseinrichtung 210 kann beispielsweise mindestens eine Lichtquelle 211 zum Erzeugen von Weiß licht und/oder mindestens eine Lichtquelle 212 zum Erzeugen von ultraviolettem Licht und/oder mindestens eine Lichtquelle 213 zum Erzeugen von infrarotem Licht aufweisen. Durch die Integration einer entsprechenden Lichtquelle in das digitale Mikroskop 200 kann sichergestellt werden, dass eine Struktur des Messobjekts 10 optimal beleuchtet wird. Die Lichtquelle/Lichtquellen können an dem Bedienelement 260 eingeschaltet werden.

Falls es sich bei der Struktur des Messobjekts um eine sichtbare Struktur, beispielsweise eine Kante einer Beschriftung, handelt, kann die Lichtquelle 211 zum Erzeugen von Weißlicht eingeschaltet werden, um die Struktur zu beleuchten. Durch die Verwendung einer Lichtquelle 212 zum Erzeugen von ultraviolettem Licht und/oder einer Lichtquelle 213 zum Erzeugen von infrarotem Licht ist es möglich, UV-/IR-aktive Substanzen auf dem Messobjekt, beispielsweise im Druckbild eines Etiketts, visuell zu erfassen und zu analysieren. Dadurch können beispielsweise Lumineszenzflächen auf der Oberfläche eines Messobjekts geometrisch vermessen werden.

Gemäß einer weiteren möglichen Ausführungsform der Messanordnung 1 umfasst das digitale Mikroskop 200 eine Heizquelle 220 zum Erwärmen des Messobjekts. Mit Hilfe der in das digitale Mikroskop 200 integrierten Heizquelle 220 können beispielsweise diverse Elemente durch thermische Einwirkung auf eine Materialoberfläche eines Messobjekts sichtbar gemacht werden. Dazu gehören beispielsweise Strukturen aus thermoreaktiven Farben. Diese Strukturen sind mit bloßem Auge nicht sichtbar, können jedoch durch Erwärmen mittels der Heizquelle 220 sichtbar gemacht und auf dem Bildschirm 240 des digitalen Mikroskops 200 angezeigt werden.

Gemäß einer möglichen Ausführungsform umfasst die Messanordnung 1 eine Arbeitsplatte 300 zum Auflegen des Messobjekts 10 und zum Anordnen des elektronischen Lineals 100 auf der Arbeitsplatte 300. Das elektronische Lineal 100 kann beispielsweise mittels der Befestigungseinrichtung 120 auf der Arbeitsplatte 300 fixiert werden. Die Funktionsarbeitsplatte 300 kann magnetisch, beispielsweise als eine metallische Arbeitsplatte, ausgebildet sein. Wenn an der Unterseite des elektronischen Lineals 100 als Befestigungseinrichtung 120 der mindestens eine Magnet 121 vorgesehen ist, lässt sich das elektronische Lineal 100 auf der magnetischen Arbeitsplatte 300 sicher befestigen, so dass ein Verrutschen des elektronischen Lineals verhindert ist.

Zur Fixierung eines Messobjekts kann die Messanordnung 1 eine Abdeckung 400 zum Abdecken des Messobjekts auf der Arbeitsplatte 300 aufweisen. Die Abdeckung 400 ist transparent ausgebildet, so dass das Messobjekt durch die Abdeckung 400 sichtbar ist. Die Abdeckung 400 kann beispielsweise als eine transparente dünne Folie oder eine transparente Scheibe, beispielsweise eine Scheibe aus Plexiglas, ausgebildet sein. Das Messobjekt kann zwischen der transparenten Abdeckung 400 und der Arbeitsplatte 300 auf der Arbeitsplatte angeordnet werden. Das Befestigungselement 600 liegt auf der Abdeckung 400 auf. Die Abdeckung 400 bietet einen Schutz vor einer Beschädigung der Oberfläche des Messobjekts. Bei dem in Figur 1 dargestellten Ausführungsbeispiel sind die Messobjekte Etiketten 10, die auf dem Etikettenbogen 2 aufgeklebt sind. Der Bogen ist auf der Arbeitsplatte 300 zwischen der Abdeckung 400 und der Oberfläche der Arbeitsplatte 300 angeordnet.

Die Messobjekte weisen üblicherweise eine unterschiedliche Farbe auf beziehungsweise können auch transparent ausgebildet sein. Ein Beispiel für transparente Messobjekte sind Folien, die mit Strukturen bedruckt sind. Um unterschiedliche Messobjekte mittels des digitalen Mikroskops 200 erfassen zu können, kann die Arbeitsplatte 300 verschiedene Bereiche 310, 320 umfassen, die jeweils eine unterschiedliche Färbung oder Strukturierung aufweisen.

Im Ausführungsbeispiel der Figur 1 ist die Oberfläche des Bereichs 320 der Arbeitsplatte 300 beispielsweise grau gefärbt. Dadurch können Messobjekte mit einem weißen Trägersubstrat, beispielsweise Etiketten mit einem weißen Trägersubstrat, das mit einer Farbe bedruckt ist, auf dem Bildschirm 240 deutlich sichtbar angezeigt werden. Durch entsprechende Einfärbung eines Bereichs der Oberfläche der Arbeitsplatte 300 können auch Messobjekte mit einem transparenten Träger, beispielsweise eine transparente Folie, die mit einer Struktur bedruckt ist, auf dem Bildschirm 240 des digitalen Mikroskops gut erkennbar dargestellt werden.

Zur horizontalen/vertikalen Ausrichtung des elektronischen Lineals 100 können gemäß einer möglichen Ausführungsform an den Seiten der Arbeitsplatte 300 Führungsschienen 330a und 330b vorgesehen sein, in die das elektronische Lineal eingesetzt werden kann. Das elektronische Lineal kann dazu an seiner Unterseite angebrachte vorstehende Elemente aufweisen, mit denen das Lineal 100 in die Führungsschienen eingesetzt ist. In den Führungsschienen 330a und 330b kann das elektronische Lineal auf der Arbeitsplatte 300 nach oben oder unten verschoben werden. Alternativ dazu besteht eine weitere Möglichkeit zur vertikalen/horizontalen Ausrichtung des Lineals 100 darin, ein Winkelstück zu verwenden, das mit einer Seite an den Rand der Arbeitsplatte 300 angelegt werden kann und an dessen anderer Seite das Lineal 100 angelegt und ausgerichtet werden kann.

Anhand der Figuren 3A und 3B wird im Folgenden an einem Beispiel dargestellt, wie mit Hilfe der Messanordnung 1 Abstände zwischen Strukturen eines Messobjekts 10 vermessen werden können. Das Messobjekt 10 ist beispielsweise ein Etikett, das zusammen mit weiteren Etiketten auf einem Etikettenbogen 2 aufgebracht ist.

Wie in Figur 1 dargestellt ist, kann ein Anwender zunächst den Etikettenbogen 2 auf der Arbeitsplatte 300 auflegen. Zum sicheren Fixieren wird der Etikettenbogen zwischen der Oberfläche der Arbeitsplatte 300 und der transparenten Abdeckung 400 platziert. Die Messanordnung 1 aus dem Messlineal 100 und dem digitalen Mikroskop 200 wird anschließend auf die Arbeitsplatte 300 beziehungsweise die transparente Abdeckung 400 gestellt. Mittels der Befestigungseinrichtung 120, beispielsweise der an der Unterseite des elektronischen Lineals 100 angeordneten Magnete 121, wird das Messobjekt 10 zwischen der Arbeitsplatte 300 und der Abdeckung 400 sicher fixiert.

Als Beispiel soll ein Abstand zwischen Kanten 11, 12 von Strukturen des Messobjekts 10 vermessen werden. Dazu wird das elektronische Lineal 100 als auch das digitale Mikroskop 200 an der Bedieneinrichtung 140 beziehungsweise dem Bedienelement 260 eingeschaltet. Der Messschlitten 110 wird anschließend soweit verfahren, bis eine Kante 11 einer Struktur des Messobjekts im Bild, das auf dem Bildschirm 240 angezeigt wird, sichtbar ist. Gegebenenfalls wird zur Sichtbarmachung der Struktur eine der Lichtquellen 211, 212, 213 oder die Heizquelle 220 an dem Bedienelement 260 eingeschaltet.

Zur Feinausrichtung des digitalen Mikroskops 200 wird der Messschlitten 110 verfahren, bis der Marker 250 deckungsgleich über der Kante 11 einer zur vermessenen Struktur liegt. Im dargestellten Beispiel ist der Marker 250 als ein Rahmen ausgebildet, dessen Seitenlinie auf die Messkante 11 einer Struktur des Messobjekts ausgerichtet wird.

Nach dem Ausrichten des digitalen Mikroskops 200 wird der auf der Anzeigeeinrichtung 130 momentan angezeigte Messwert durch Betätigen der Bedieneinrichtung 140 auf eine Nullstellung zurückgesetzt. Ein Anwender kann nun den Messschlitten 110 zu einer zweiten Messkante 12 der Struktur des Messobjekts, die in Figur 3B dargestellt ist, verschieben. Mittels des Markers 250 kann auch an der zweiten Messkante 12 eine Feinausrichtung des digitalen Mikroskops 200 erfolgen, bis der Marker 250, beispielsweise eine Seitenlinie des Rahmens, auf dem Bildschirm 240 deckungsgleich zu der zweiten Messkante 12 des Messobjekts liegt. Der nun auf der Anzeigeeinrichtung 130 angezeigte Messwert entspricht dem Abstand zwischen der ersten Messkante 11 und der zweiten Messkante 12 des Messobjekts.

Mit Hilfe der Messanordnung 1 lassen sich Abstände zwischen Strukturen eines Messobjekts hochpräzise vermessen. Es können eine Vielzahl von Strukturen, beispielweise Abstände zwischen Kanten, grafische Elemente, Prägungen, Schlitzungen, Gravuren und vieles mehr auf unterschiedlichen Trägermaterialen, wie zum Beispiel Papier, Folien, Textilien, Stanzblechen usw. vermessen werden.

Durch die Verwendung eines Digitalmikroskops werden Paralaxenfehler vermieden. Mit Hilfe der Lichtquelle 211 zum Erzeugen von Weißlicht kann ein Messobjekt optimal beleuchtet werden. Des Weiteren können UV-/IR-aktive Substanzen durch Beleuchtung mit der UV-Lichtquelle 212 beziehungsweise der IR-Lichtquelle 213 sichtbar gemacht werden. Falls das Messobjekt thermo-reaktive Merkmale aufweist, die zu untersuchen sind, können diese Strukturen mittels der in dem digitalen Mikroskop 200 integrierten Heizquelle 220 sichtbar gemacht werden.

Durch Verwendung einer in das Mikroskop 200 integrierten Kamera 230 mit Vergrößerungsfunktion können interessierende Elemente eines Messobjekts vergrößert/herangezoomt werden, um somit das digitale Mikroskop optimal auf die zu analysierende Struktur des Messobjekts auszurichten. Mittels des digitalen Mikroskops können digitale Bilder erstellt werden, die zu Protokollierungszwecken gespeichert werden können.

Durch Fixierung des Messobjekts zwischen der Arbeitsplatte 300 und der Abdeckung 400 kann das Messobjekt einerseits sicher fixiert werden und andererseits können Beschädigungen an der Materialoberfläche des Messobjekts bei der Betrachtung durch das digitale Mikroskop vermieden werden.

### Bezugszeichenliste

- 1: Messanordnung
- 100: elektronisches Lineal
- 110: Messschlitten
- 120: Befestigungseinrichtung
- 130: Anzeigeeinrichtung
- 140: Bedieneinrichtung
- 150: Schiene
- 200: digitales Mikroskop
- 210: Beleuchtungseinrichtung
- 220: Heizquelle
- 230: Kamera
- 240: Bildschirm
- 250: Marker
- 260: Bedienelement
- 300: Arbeitsplatte
- 310, 320: Bereiche der Arbeitsplatte
- 330a, 330b: Führungsschiene
- 400: Abdeckung
- 500: Halteelement
- 600: Befestigungselement

## Patentansprüche

1. Messanordnung zum Vermessen von Strukturen eines auf einem Untergrund aufliegenden Messobjekts, umfassend:
- ein elektronisches Lineal (100) mit einem Messschlitten (110) und einer Schiene (150), wobei der Messschlitten (110) entlang der Schiene (150) in Längsrichtung der Schiene (150) verschiebbar angeordnet ist,
- ein digitales Mikroskop (200),
- wobei das elektronische Lineal (100) eine Befestigungseinrichtung (120) zum Befestigen der Messanordnung (1) auf dem Untergrund aufweist, wobei die Befestigungseinrichtung (120) mindestens einen Magnet (121) oder einen Saugfuß (122) aufweist oder als ein Gewicht zum Beschweren der Messanordnung, um ein Verrutschen der Messanordnung auf dem Untergrund zu verhindern, ausgebildet ist,
- wobei das digitale Mikroskop (200) an dem Messschlitten (110) des elektronischen Lineals (100) derart befestigt ist, dass das digitale Mikroskop (200) bei einer Bewegung des Messschlittens (110) mitbewegt wird und durch ein Verschieben des Messschlittens (110) entlang der Schiene (150) auf unterschiedliche Positionen des Untergrundes ausrichtbar ist,
- wobei der Messschlitten (110) eine Anzeigeeinrichtung (130) zum Anzeigen eines Verfahrwegs des Messschlittens (110) aufweist.

2. Messanordnung nach Anspruch 1,
wobei das digitale Mikroskop (200) eine Beleuchtungseinrichtung (210) zum Beleuchten des Messobjekts (10) aufweist.

3. Messanordnung nach Anspruch 2,
wobei die Beleuchtungseinrichtung (210) mindestens eine Lichtquelle (211, 212, 213) zum Erzeugen von Weißlicht und/oder von ultraviolettem Licht und/oder von infrarotem Licht aufweist.

4. Messanordnung nach einem der Ansprüche 1 bis 3,
wobei das digitale Mikroskop (200) eine Heizquelle (220) zum Erwärmen des Messobjekts (10) aufweist.

5. Messanordnung nach einem der Ansprüche 1 bis 4,
- wobei die Anzeigeeinrichtung (130) zum digitalen Anzeigen eines Messwertes, der einen Abstand zwischen den Strukturen des Messobjekts (10) angibt, ausgebildet ist,
- wobei das elektronische Lineal (100) eine Bedieneinrichtung (140) zum Zurücksetzen des Messwertes auf eine Nullstellung aufweist,
- wobei das elektronische Lineal (100) derart ausgebildet ist, dass sich der auf der Anzeigeeinrichtung (130) angezeigte Messwert ausgehend von der Nullstellung in Abhängigkeit von einer Bewegung des Messschlittens (110) verändert.

6. Messanordnung nach einem der Ansprüche 1 bis 5,
wobei das digitale Mikroskop (200) eine Kamera (230) zur Aufnahme eines Bildes des Messobjekts (10) und einen Bildschirm (240) zur Anzeige des aufgenommenen Bildes des Messobjekts (10) aufweist.

7. Messanordnung nach Anspruch 6,
wobei die Kamera (230) eine Vergrößerungsfunktion zum Vergrößern eines Bereichs des Messobjekts (10) in dem auf dem Bildschirm (240) angezeigten Bild aufweist.

8. Messanordnung nach einem der Ansprüche 6 oder 7,
wobei das digitale Mikroskop (200) derart ausgebildet ist, dass in dem Bild auf dem Bildschirm (240) ein Marker (250) zum Ausrichten des digitalen Mikroskops (200) auf eine Struktur (11, 12) des Messobjekts (10) eingeblendet ist.

9. Messanordnung nach einem der Ansprüche 1 bis 8, umfassend:
eine Arbeitsplatte (300) zum Auflegen des Messobjekts (10) und zum Anordnen des elektronischen Lineals (100) auf der Arbeitsplatte (300).

10. Messanordnung nach Anspruch 9,
wobei die Arbeitsplatte (300) magnetisch ausgebildet ist.

11. Messanordnung nach einem der Ansprüche 9 oder 10, umfassend:
eine transparente Abdeckung (400) zum Abdecken des Messobjekts (10) auf der Arbeitsplatte (300).

12. Messanordnung nach Anspruch 11,
wobei die Abdeckung (400) als eine transparente Folie oder eine transparente Scheibe ausgebildet ist.

13. Messanordnung nach einem der Ansprüche 11 oder 12,
wobei die Arbeitsplatte (300) Bereiche (310, 320) mit unterschiedlicher Färbung oder Strukturierung aufweist.

## Claims

1. Measuring assembly for measuring structures of a measuring object resting on a support, comprising:
- an electronic ruler (100) including a measuring carriage (110) and a rail (150), wherein the measuring carriage (110) is arranged to be movable along the rail (150) in the longitudinal direction of the rail (150),
- a digital microscope (200),
- wherein the electronic ruler (100) comprises a fastening device (120) for fastening the measuring assembly (1) on the support, wherein the fastening device (120) comprises at least one magnet (121) or a suction cup base (122) or is formed as a weight for weighing down the measuring assembly in order to prevent the measuring assembly from slipping on the support,
- wherein the digital microscope (200) is fastened to the measuring carriage (110) of the electronic ruler (100) in such a manner that the digital microscope (200) is entrained during movement of the measuring carriage (110) and can be aligned to different positions of the support by moving the measuring carriage (110) along the rail (150),
- wherein the measuring carriage (110) comprises a display device (130) for displaying a travel distance of the measuring carriage (110).

2. The measuring assembly according to claim 1,
wherein the digital microscope (200) comprises a lighting device (210) for lighting the measuring object (10).

3. The measuring assembly according to claim 2,
wherein the lighting device (210) comprises at least one light source (211, 212, 213) for generating white light and/or ultraviolet light and/or light infrared light.

4. The measuring assembly according to any of the claims 1 to 3,
wherein the digital microscope (200) comprises a heat source (220) for heating the measuring object (10).

5. The measuring assembly according to any of the claims 1 to 4,
- wherein the display device (130) is configured for digitally displaying a measured value which indicates a distance between the structures of the measuring object (10),
- wherein the electronic ruler (100) comprises an operating device (140) for resetting the measured value to a zero position,
- wherein the electronic ruler (100) is configured such that the measured value displayed on the display device (130) changes starting from the zero position as a function of a movement of the measuring carriage (110).

6. The measuring assembly according to any of the claims 1 to 5,
wherein the digital microscope (200) comprises a camera (230) for capturing a picture of the measuring object (10) and a screen (240) for displaying the captured picture of the measuring object (10).

7. The measuring assembly according to claim 6,
wherein the camera (230) has an enlarging function for enlarging a zone of the measuring object (10) in the picture displayed on the screen (240).

8. The measuring assembly according to any of the claims 6 or 7,
wherein the digital microscope (200) is configured such that a marker (250) for aligning the digital microscope (200) to a structure (11, 12) of the measuring object (10) is superimposed in the picture on the screen (240).

9. The measuring assembly according to any of the claims 1 to 8, comprising:
a work surface (300) for placing the measuring object (10) and for arranging the electronic ruler (100) on the work surface (300).

10. The measuring assembly according to claim 9,
wherein the work surface (300) is configured so as to be magnetic.

11. The measuring assembly according to any of the claims 9 or 10, comprising:
a transparent cover (400) for covering the measuring object (10) on the work surface (300).

12. The measuring assembly according to claim 11,
wherein the cover (400) is realized as a transparent foil or a transparent pane.

13. The measuring assembly according to any of the preceding claims 11 or 12,
wherein the work surface (300) comprises zones (310, 320) with different coloration or structuration.

## Revendications

1. Agencement de mesure destiné à mesurer des structures d'un objet à mesurer qui repose sur un support, comprenant :
- une règle électronique (100) présentant une glissière de mesure (110) et un rail (150), sachant que la glissière de mesure (110) est disposée de manière translatable le long du rail (150) en direction longitudinale du rail (150),
- un microscope numérique (200),
- sachant que la règle électronique (100) présente un dispositif de fixation (120) destiné à fixer l'agencement de mesure (1) sur le support, sachant que le dispositif de fixation (120) présente au moins un aimant (121) ou un pied ventouse (122) ou est constitué comme poids destiné à alourdir l'agencement de mesure pour empêcher un glissement de l'agencement de mesure sur le support,
- sachant que le microscope numérique (200) est fixé à la glissière de mesure (110) de la règle électronique (100) de telle manière que le microscope numérique (200) se déplace également en cas de déplacement de la glissière de mesure (110) et soit orientable vers différentes positions du support par une translation de la glissière de mesure (110) le long du rail (150),
- sachant que la glissière de mesure (110) présente un dispositif d'affichage (130) destiné à afficher une distance de déplacement de la glissière de mesure (110).

2. Agencement de mesure selon la revendication 1,
sachant que le microscope numérique (200) présente un dispositif d'éclairage (210) destiné à éclairer l'objet à mesurer (10).

3. Agencement de mesure selon la revendication 2,
sachant que le dispositif d'éclairage (210) présente au moins une source de lumière (211, 212, 213) destinée à générer de la lumière blanche et/ou de la lumière ultraviolette et/ou de la lumière infrarouge.

4. Agencement de mesure selon l'une des revendications 1 à 3,
sachant que le microscope numérique (200) présente une source de chaleur (220) destinée à réchauffer l'objet à mesurer (10).

5. Agencement de mesure selon l'une des revendications 1 à 4,
- sachant que le dispositif d'affichage (130) est constitué pour l'affichage numérique d'une valeur de mesure qui indique un écart entre les structures de l'objet à mesurer (10),
- sachant que la règle électronique (100) présente un dispositif de commande (140) destiné à réinitialiser la valeur de mesure à une position zéro,
- sachant que la règle électronique (100) est constituée de telle manière que la valeur de mesure affichée sur le dispositif d'affichage (130) change en partant de la position zéro en fonction d'un déplacement de la glissière de mesure (110).

6. Agencement de mesure selon l'une des revendications 1 à 5,
sachant que le microscope numérique (200) présente une caméra (230) destinée à prendre une image de l'objet à mesurer (10) et un écran (240) destiné à afficher l'image prise de l'objet à mesurer (10).

7. Agencement de mesure selon la revendication 6,
sachant que la caméra (230) présente une fonction d'agrandissement destinée à agrandir une zone de l'objet à mesurer (10) dans l'image affichée sur l'écran (240).

8. Agencement de mesure selon l'une des revendications 6 ou 7,
sachant que le microscope numérique (200) est constitué de telle manière qu'un marqueur (250) destiné à orienter le microscope numérique (200) vers une structure (11, 12) de l'objet à mesurer (10) est superposé dans l'image sur l'écran (240).

9. Agencement de mesure selon l'une des revendications 1 à 8, comprenant :
un plateau de travail (300) destiné à poser l'objet à mesurer (10) et à disposer la règle électronique (100) sur le plateau de travail (300).

10. Agencement de mesure selon la revendication 9,
sachant que le plateau de travail (300) est constitué de manière magnétique.

11. Agencement de mesure selon l'une des revendications 9 ou 10, comprenant :
un recouvrement (400) transparent destiné à recouvrir l'objet de mesure (10) sur le plateau de travail (300).

12. Agencement de mesure selon la revendication 11,
sachant que le recouvrement (400) est constitué comme film transparent ou comme vitre transparente.

13. Agencement de mesure selon l'une des revendications 11 ou 12,
sachant que le plateau de travail (300) présente des zones (310, 320) de coloration ou de structuration différente.
